# EUROPEAN PATENT APPLICATION

(11) **EP 3 805 317 A1**
(43) Date of publication of application: **14.04.2021**
(21) Application number: 19815252.2
(22) Date of filing: 28.05.2019
(51) Int. Cl.: C08L 83/14, C08K 3/00, C08K 3/22, C08K 3/28

(54) **THERMALLY CONDUCTIVE SILICONE COMPOSITION AND METHOD FOR PRODUCING SAME**

(30) Priority: 08.06.2018 JP 2018110317
(71) Applicant: SHIN-ETSU CHEMICAL CO., LTD., Tokyo 100-0004 (JP)
(72) Inventor: ICHIROKU, Nobuhiro, Annaka-shi, Gunma 379-0224 (JP)
(74) Representative: Mewburn Ellis LLP
(86) International application number: PCT/JP2019/020998
(87) International publication number: WO 2019/235293

(57) **Abstract**

The present invention provides a thermally conductive silicone composition which contains:
an organopolysiloxane which is a reaction product obtained by reacting (A) an organopolysiloxane having an alkenyl group bonded to a silicon atom and (B) an organohydrogen polysiloxane with each other at a molar ratio of the Si-H group in the component (B) to the alkenyl group bonded to a silicon atom in the component (A), namely (Si-H/Si-Vi) of 2.0-9.0;
(C) an inorganic filler which is selected from among metal oxides and metal nitrides, and which has an average particle diameter of 3 µm or less; and
(D) a thermally conductive inorganic filler which has an average particle diameter of 5 µm or more.

This thermally conductive silicone composition has excellent displacement resistance and excellent coatability by setting the total of the component (C) and the component (D) to 200-6,000 parts by mass relative to 100 parts by mass of the total of the component (A) and the component (B), and having an absolute viscosity at 25°C of 100-800 Pa·s. The present invention also provides a method for producing this thermally conductive silicone composition.

## Description

### TECHNICAL FIELD

This invention relates to a heat-conductive silicone composition and more particularly, to a heat-conductive silicone composition having improved coating performance and slide resistance, and to a method for preparing the same.

### BACKGROUND ART

Since electric and electronic devices typically generate heat during service, heat removal is necessary in order that the devices operate properly. In the prior art, various heat-conductive materials are proposed for the heat removal purpose. The heat-conductive materials are divided into two types, (1) sheet-like materials, which are easy to handle, and (2) paste-like materials known as thermal greases.

The sheet-like materials (1) have the advantages of ease of handling and stability, but their heat dissipation ability is inferior to the thermal greases essentially because of increased contact thermal resistance. Also, since the materials should have sufficient levels of strength and hardness to maintain the sheet shape, they fail to accommodate the tolerance between devices and casings, with the risk that devices can be broken by stresses.

In contrast, the thermal greases (2) are amenable to the mass-scale manufacture of electric and electronic devices by means of applicators or the like, and have the advantage of good heat dissipation ability due to low contact thermal resistance. However, when the viscosity of thermal grease is reduced for effective coating performance, the thermal grease can be slid or shifted by thermal cycling experienced by devices; this is known as the pump-out phenomenon. It causes insufficient heat removal, which can cause devices to malfunction.

Under these circumstances, there have been proposed heat-conductive silicone compositions of higher performance, as shown below. Patent Document 1 (JP-A H11-049958) discloses a grease-like silicone composition comprising a specific organopolysiloxane, a thickener (e.g. zinc oxide, alumina, aluminum nitride, boron nitride or silicon carbide), an organopolysiloxane having at least one silicon-bonded hydroxyl group per molecule, and an alkoxysilane, which prevents the base oil from bleeding. Patent Document 2 (JP-A H11-246884) discloses a heat-conductive silicone composition comprising a liquid silicone, a heat-conductive inorganic filler having a specified thermal conductivity and a Mohs hardness of at least 6, and a heat-conductive inorganic filler having a specified thermal conductivity and a Mohs hardness of up to 5, the composition having satisfactory heat conducting and dispensing properties. Patent Document 3 (JP-A 2000-063873) discloses a heat-conductive grease composition comprising a specific base oil and metallic aluminum powder having an average particle size of 0.5 to 50 µm. Patent Document 4 (JP-A 2000-169873) discloses a silicone grease composition comprising a mixture of two aluminum nitride powders having different average particle sizes whereby the packing rate of aluminum nitride in the silicone grease is increased. Patent Document 5 (JP-A 2003-301189) discloses a silicone grease composition wherein the viscosity of silicone oil is increased to control bleed-out. However, none of these heat-conductive silicone compositions has fully complied with the trend of currently used electric and electronic devices towards high performance.

### PRIOR ART DOCUMENTS

### Patent Documents

Patent Document 1: JP-A H11-049958
Patent Document 2: JP-A H11-246884
Patent Document 3: JP-A 2000-063873
Patent Document 4: JP-A 2000-169873
Patent Document 5: JP-A 2003-301189

### SUMMARY OF THE INVENTION

### Technical Problem

An object of the invention, which has been made under the above-mentioned circumstances, is to provide a heat-conductive silicone composition having improved slide resistance and coating performance, and a method for preparing the same.

### Solution To The Problem

Making extensive investigations to attain the above object, the inventor has found that satisfactory slide resistance and coating performance are achievable by combining a reaction product obtained from reaction of (A) an organopolysiloxane having a silicon-bonded alkenyl group with (B) an organohydrogenpolysiloxane in a specific molar ratio (Si-H/Si-Vi), with (C) an inorganic filler having a specific average particle size and (D) a heat-conductive inorganic filler having a specific average particle size in specific amounts. The invention is predicated on this finding.

Accordingly, the invention provides a heat-conductive silicone composition and a method for preparing the same, as defined below.
1. A heat-conductive silicone composition comprising:
an organopolysiloxane which is a reaction product obtained by reacting (A) an organopolysiloxane having a silicon-bonded alkenyl group with (B) an organohydrogenpolysiloxane in a molar ratio (Si-H/Si-Vi) of the Si-H group in component (B) to the silicon-bonded alkenyl group in component (A) which ranges from 2.0 to 9.0,
(C) an inorganic filler selected from among metal oxides and metal nitrides and having an average particle size of up to 3 µm, and
(D) a heat-conductive inorganic filler having an average particle size of at least 5 µm,
wherein the total of components (C) and (D) is 200 to 6,000 parts by weight per 100 parts by weight of the total of components (A) and (B), and the silicone composition has an absolute viscosity at 25°C of 100 to 800 Pa·s.
2. A heat-conductive silicone composition of 1 wherein when a storage modulus is measured under the following rheometer conditions:

| | |
|---|---|
| measurement jig: | parallel plates P20 TL |
| measurement gap: | 1.00 mm (sample volume: 4.0 mL) |
| measurement mode: | fixed deformation-frequency dependent measurement |
| deformation conditions: | CD-Auto Strain 1.00±0.05% |
| measurement frequency: | 0.1-10 Hz |
| measurement temperature: | 25°C±1°C, ramp at 15°C/min to 150°C, 150°C±1°C, |

the silicone composition has a G'(150°C)/G'(25°C) ratio of 2 to 20.
3. A heat-conductive silicone composition of 1 or 2 wherein component (C) is one or more fillers selected from aluminum oxide powder, zinc oxide powder, magnesium oxide powder, aluminum nitride powder, and boron nitride powder, having a point of zero charge (PZC) of at least pH6.
4. A method for preparing a heat-conductive silicone composition of any one of 1 to 3, comprising the steps of mixing components (A), (B), (C) and (D) with a platinum group metal based curing catalyst such that a molar ratio (Si-H/Si-Vi) of Si-H group in component (B) to silicon-bonded alkenyl group in component (A) may range from 2.0 to 9.0, and heating the mixture at 100 to 180°C for 30 minutes to 4 hours for reacting component (A) with component (B).

### ADVANTAGEOUS EFFECTS OF THE INVENTION

According to the invention, there are provided a heat-conductive silicone composition having improved slide resistance and coating performance and a method for preparing the same. The heat-conductive silicone composition is suitable for removing heat from electric and electronic devices that generate heat during service. Sometimes, the term "heat-conductive silicone composition" is referred to hereinafter as "silicone composition".

### DESCRIPTION OF EMBODIMENTS

Now the invention is described in detail.

### ORGANOPOLYSILOXANE

The organopolysiloxane used herein is a reaction product obtained by reacting (A) organopolysiloxane having a silicon-bonded alkenyl group with (B) organohydrogenpolysiloxane in a molar ratio (Si-H/Si-Vi) of Si-H group in component (B) to silicon-bonded alkenyl group in component (A) which ranges from 2.0 to 9.0. This reaction product is simply referred to as the "reaction product of components (A)/(B)", hereinafter.

### Component (A)

The alkenyl-containing organopolysiloxane has on the average at least one silicon-bonded alkenyl group per molecule, typically 1 to 20 alkenyl groups, preferably at least 2 alkenyl groups, more preferably about 2 to about 10 alkenyl groups per molecule. Such organopolysiloxanes may be used alone or in admixture.

The molecular structure of component (A) is not particularly limited, and includes linear, partially branched linear, branched, cyclic, and branched cyclic structures. Typically, an organopolysiloxane of substantially linear structure is preferred, specifically a linear diorganopolysiloxane which has a backbone composed mainly of repeating diorganosiloxane units and is capped with triorganosiloxy groups at both ends of the molecular chain. Also component (A) may be either a polymer of identical siloxane units or a copolymer composed of siloxane units of two or more types. The position of silicon-bonded alkenyl group in component (A) is not particularly limited, and the alkenyl group may bond to either one or both of a silicon atom at the end of the molecular chain and a silicon atom at a non-terminal (or midway) position of the molecular chain.

Typical of component (A) is an organopolysiloxane containing at least one silicon-bonded alkenyl group, represented by the average compositional formula (1):

R¹ₘR²ₙSiO_{(4-m-n)/2} (1)

wherein R¹ is independently a substituted or unsubstituted monovalent hydrocarbon group free of aliphatic unsaturation, R² is independently an alkenyl group, m is a positive number of 0.5 to 2.5, preferably 0.8 to 2.2, n is a positive number of 0.0001 to 0.2, preferably 0.0005 to 0.1, and m+n is typically a positive number of 0.8 to 2.7, preferably 0.9 to 2.2.

R¹ is a substituted or unsubstituted monovalent hydrocarbon group, typically of 1 to 10 carbon atoms, free of aliphatic unsaturation. Examples of R¹ include alkyl groups such as methyl, ethyl, propyl, isopropyl, butyl, isobutyl, tert-butyl, hexyl, octyl and decyl, aryl groups such as phenyl, tolyl, xylyl and naphthyl, cycloalkyl groups such as cyclopentyl and cyclohexyl, aralkyl groups such as benzyl, 2-phenylethyl and 3-phenylpropyl, and substituted forms of the foregoing hydrocarbon groups in which some or all of the carbon-bonded hydrogen atoms are substituted by halogen atoms (e.g. chlorine, bromine and iodine), cyano or the like, such as chloromethyl, 2-bromoethyl, 3,3,3-trifluoropropyl and cyanoethyl.

Of these, methyl, phenyl or a mixture thereof is preferred. Component (A) wherein R¹ is methyl, phenyl or a mixture thereof is easy to synthesize and chemically stable. When it is desired to use an organopolysiloxane having solvent resistance as component (A), R¹ is more preferably a combination of methyl, phenyl or a mixture thereof with 3,3,3-trifluoropropyl.

R² is an alkenyl group, typically of 2 to 8 carbon atoms. Examples of R² include vinyl, allyl, 1-propenyl, isopropenyl, 1-butenyl, isobutenyl, and hexenyl. Inter alia, vinyl is preferred. Component (A) wherein R² is vinyl is easy to synthesize and chemically stable.

Illustrative examples of component (A) include molecular chain both end trimethylsiloxy-capped dimethylsiloxane/methylvinylsiloxane copolymers, molecular chain both end trimethylsiloxy-capped methylvinylpolysiloxane, molecular chain both end trimethylsiloxy-capped dimethylsiloxane/methylvinylsiloxane/methylphenylsiloxane copolymers, molecular chain both end trimethylsiloxy-capped dimethylsiloxane/methylvinylsiloxane/diphenylsiloxane copolymers, molecular chain both end dimethylvinylsiloxy-capped dimethylpolysiloxane, molecular chain both end dimethylvinylsiloxy-capped methylvinylpolysiloxane, molecular chain both end dimethylvinylsiloxy-capped dimethylsiloxane/methylvinylsiloxane copolymers, molecular chain both end dimethylvinylsiloxy-capped dimethylsiloxane/methylvinylsiloxane/methylphenylsiloxane copolymers, molecular chain both end dimethylvinylsiloxy-capped dimethylsiloxane/methylvinylsiloxane/diphenylsiloxane copolymers, molecular chain both end divinylmethylsiloxy-capped dimethylpolysiloxane, and molecular chain both end trivinylsiloxy-capped dimethylpolysiloxane. These organopolysiloxanes may be used alone or in admixture of two or more, or in combination with an organopolysiloxane having a different degree of polymerization.

Component (A) should preferably have a viscosity at 25°C of 0.1 to 20,000 mPa·s, more preferably 10 to 1,000 mPa·s. If the viscosity is too low, the resulting silicone composition is likely to allow the heat-conductive inorganic filler to settle down, with the risk of losing long-term storage stability. If the viscosity is too high, the resulting silicone composition has a likelihood of a substantial lack of flow and may become inefficient to work. As used herein, the absolute viscosity is measured by a spiral viscometer such as Malcom viscometer Type PC-10AA.

### Component (B)

Component (B) is organohydrogenpolysiloxane having at least one silicon-bonded hydrogen atom (Si-H group) per molecule, which may be used alone or in admixture. The organohydrogenpolysiloxane as component (B) is a curing agent for component (A) and should have on the average at least one, preferably at least 2 (typically about 2 to about 300), more preferably at least 3 (typically about 3 to about 200) silicon-bonded hydrogen atoms (Si-H groups) per molecule. The molecular structure of component (B) is not particularly limited, and may be a linear, branched, cyclic, or three dimensional network (or resinous) structure. Typically an organohydrogenpolysiloxane having the average compositional formula (2) may be used.

R³ₚH_{q}SiO_{(4-p-q)/2} (2)

Herein R³ is a substituted or unsubstituted monovalent hydrocarbon group, exclusive of aliphatic unsaturated hydrocarbon group, p is a positive number of 1.0 to 3.0, preferably 0.5 to 2.5, q is a positive number of 0.05 to 2.0, preferably 0.01 to 1.0, and p+q is from 0.5 to 3.0, preferably 0.8 to 2.5.

In formula (2), R³ is an unsubstituted or halo-substituted monovalent hydrocarbon group of 1 to 10 carbon atoms, preferably 1 to 8 carbon atoms, free of aliphatic unsaturation, examples of which include alkyl groups such as methyl, ethyl, propyl, butyl, pentyl, hexyl, isopropyl, isobutyl, tert-butyl and cyclohexyl, aryl groups such as phenyl, tolyl, and xylyl, aralkyl groups such as benzyl and phenethyl, and halogenated alkyl groups such as 3-chloropropyl and 3,3,3-trifluoropropyl. Inter alia, methyl, ethyl, propyl, phenyl, and 3,3,3-trifluoropropyl are preferred, with methyl being most preferred.

Illustrative examples of the organohydrogenpolysiloxane as component (B) include 1,1,3,3-tetramethyldisiloxane, 1,3,5,7-tetramethylcyclotetrasiloxane, methylhydrogencyclopolysiloxane, methylhydrogensiloxane/dimethylsiloxane cyclic copolymers, tris(dimethylhydrogensiloxy)methylsilane, tris(dimethylhydrogensiloxy)phenylsilane, molecular chain both end dimethylhydrogensiloxy-capped dimethylsiloxane/methylhydrogensiloxane copolymers, molecular chain both end dimethylhydrogensiloxy-capped methylhydrogenpolysiloxane, molecular chain both end trimethylsiloxy-capped methylhydrogenpolysiloxane, molecular chain both end dimethylhydrogensiloxy-capped dimethylpolysiloxane, molecular chain both end dimethylhydrogensiloxy-capped dimethylsiloxane/diphenylsiloxane copolymers, molecular chain both end trimethylsiloxy-capped dimethylsiloxane/methylhydrogensiloxane copolymers, molecular chain both end trimethylsiloxy-capped dimethylsiloxane/diphenylsiloxane/methylhydrogensiloxane copolymers, molecular chain both end dimethylhydrogensiloxy-capped dimethylsiloxane/methylhydrogensiloxane copolymers, copolymers consisting of H(CH₃)₂SiO_{1/2} units and SiO₂ units, copolymers consisting of H(CH₃)₂SiO_{1/2} units, (CH₃)₃SiO_{1/2} units and SiO₂ units, and mixtures of two or more of the foregoing organohydrogenpolysiloxanes.

Although the viscosity of component (B) is not particularly limited, it should preferably have a viscosity at 25°C of 0.5 to 1,000,000 mPa·s, more preferably 1 to 100,000 mPa·s. Also for the organohydrogenpolysiloxane as component (B), the number of silicon atoms per molecule (or degree of polymerization) is preferably about 2 to about 500, more preferably about 3 to about 300.

Since the inventive composition contains the reaction product obtained from reaction at a molar ratio (Si-H/Si-Vi) of the Si-H group in component (B) to the silicon-bonded alkenyl group in component (A) ranging from 2.0 to 9.0, components (A) and (B) are combined in such amounts as to give a molar ratio in the range. The molar ratio is preferably from 3.0 to 8.0, more preferably from 3.0 to 7.0. If the molar ratio is 0 < Si-H/Si-V < 2.0, the organopolysiloxane obtained from reaction of components (A) and (B) does not contain a sufficient number of Si-H residues relative to active sites in component (C), with the risk that a high modulus at 150°C is not obtained, that the value of G'(150°C)/G'(25°C), which is a ratio of storage modulus at 150°C to storage modulus at 25°C, is less than 2, that the silicone composition undergoes sliding upon thermal cycling, and the silicone composition becomes poor in coating performance due to an increased viscosity. On the other hand, if the molar ratio exceeds the upper limit, active sites in component (C) are occupied by component (B) which remains unreacted with component (A), preventing active sites in component (C) from being bridged by Si-H groups in the organopolysiloxane or reaction product of components (A)/(B), with the risk that the value of G'(150°C)/G'(25°C), which is a ratio of storage modulus at 150°C to storage modulus at 25°C, is less than 2, and that the silicone composition undergoes sliding upon thermal cycling.

The silicone composition preferably contains a platinum group metal-based curing catalyst as an addition reaction catalyst for promoting the reaction, which is selected from well-known catalysts for use in hydrosilylation reaction. The catalyst may be used alone or in admixture. Preferred is a hydrosilylation catalyst having chloroplatinic acid or a platinum complex such as chloroplatinic acid salt diluted with organopolysiloxane having an alkenyl group such as vinyl. This catalyst may be obtained by mixing a platinum complex with a vinyl-containing organopolysiloxane. When the platinum complex contains a solvent such as toluene, it is recommended to remove the solvent after mixing.

When the addition reaction catalyst is used, its amount may be a catalytic amount, typically about 0.1 to about 2,000 ppm, calculated as platinum group metal, based on the weight of component (A).

### Component (C)

Component (C) is an inorganic filler selected from metal oxides and metal nitrides and having an average particle size of up to 3 µm. This inorganic filler has a large specific surface area and interacts with the reaction product of components (A)/(B), rich with Si-H groups, to improve the storage modulus at 150°C. It also serves to tailor the particle size distribution of the heat-conductive inorganic filler as component (D) to achieve the closest packing to increase the filler loading, thereby increasing the thermal conductivity of the silicone composition.

The preferred fillers include aluminum oxide powder, zinc oxide powder, magnesium oxide powder, aluminum nitride powder, and boron nitride powder. These powders are widely used as heat-dissipating materials because they are insulating materials, selected from various industrial grades having a wide range of particle size, readily available from the resource aspect, and available at relatively low cost. Since -OH residues are present on the surface of metal oxide, or -NH₂ residues are present on the surface of metal nitride, it is expected that these groups interact with Si-H residues present in the organopolysiloxane.

Also as component (C), an inorganic filler having a point of zero charge (PZC) of at least pH 6 is preferred. If the PZC is less than pH 6, the number of sites which interact with Si-H groups on the inorganic filler surface becomes small so that an improvement in the storage modulus at 150°C is not exerted, with a possible occurrence of sliding. Note that the PZC is the pH at which the surface charge of the metal oxide or metal nitride in an aqueous solution is equal to zero.

The inorganic filler used herein as component (C) may have any of irregular, granulated, and spherical particle shapes, with spherical inorganic filler being preferred from the aspect of packing.

Component (C) has an average particle size of up to 3 µm, preferably 0.5 to 2.5 µm. If the average particle size is too small, the silicone composition becomes less flowable. If the average particle size is too large, the number of sites which interact with Si-H groups decreases, with the risk that a sufficient improvement in the storage modulus at 150°C is not achieved. As used herein, the average particle size of components (C) and (D) is a volume-based cumulative average particle diameter D₅₀ (or median diameter) as measured by the laser diffraction/scattering method, for example, a particle size analyzer Microtrac MT3300EX (Nikkiso Co., Ltd.).

In the silicone composition, component (C) is present in an amount of preferably 50 to 4,000 parts by weight, more preferably 100 to 3,000 parts by weight per 100 parts by weight of the total of components (A) and (B). If the amount of component (C) is too small, the resulting silicone composition may undergo sliding or a decline of thermal conductivity. If the amount of component (C) is too large, the resulting silicone composition may have a high viscosity and be difficult to coat uniformly. It is noted that component (C) preferably takes the form of a premix obtained by mixing and heating component (C) in components (A) and (B).

### Component (D)

Component (D) is a heat-conductive inorganic filler having an average particle size of at least 5 µm. Examples include aluminum, silver, copper, nickel, zinc oxide, aluminum oxide, silicon oxide, magnesium oxide, aluminum nitride, boron nitride, silicon nitride, silicon carbide, diamond, graphite, and metallic silicon, which may be used alone or in a suitable combination of two or more. Notably, zinc oxide, aluminum oxide, magnesium oxide, aluminum nitride and boron nitride overlap with component (C), but they differ in average particle size.

Component (D) has an average particle size of at least 5 µm, preferably 5 to 200 µm, more preferably 6 to 100 µm. If the average particle size is less than 5 µm, the silicone composition becomes non-uniform and poor in slide resistance. If the average particle size is too large, the silicone composition may become non-uniform and poor in slide resistance.

In the silicone composition, component (D) is present in an amount of preferably 100 to 5,000 parts by weight, more preferably 200 to 4,000 parts by weight per 100 parts by weight of the total of components (A) and (B).

In the silicone composition, the total amount of components (C) and (D) is 200 to 6,000 parts by weight, preferably 500 to 5,000 parts by weight per 100 parts by weight of the total of components (A) and (B). If the total amount is less than 200 parts by weight, no sufficient thermal conductivity is arrived at. If the total amount exceeds 6,000 parts by weight, no sufficient coating performance is obtainable. The weight ratio of (C):(D) is preferably from 55:45 to 95:5.

### Component (E)

The silicone composition may further comprise a hydrolysable organopolysiloxane as component (E) for reducing the viscosity prior to heat curing, which may be used alone or in admixture. Component (E) also plays the role of keeping the silicone composition flowable for imparting ease of handling thereto even when the silicone composition is heavily loaded with components (C) and (D). Preferred as component (E) is an organopolysiloxane having the following general formula (3), especially a trifunctional hydrolysable organopolysiloxane. It is noted that the order of arrangement of siloxane units in parentheses is not limited to the illustrated order. 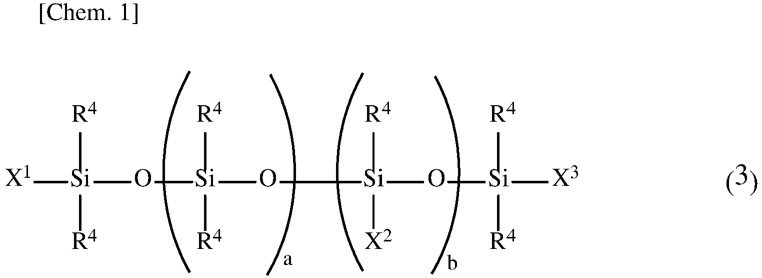 Herein R⁴ is independently a substituted or unsubstituted monovalent hydrocarbon group free of aliphatic unsaturation. Each of X¹, X², and X³ which may be the same or different is R⁴ or a group of the formula: -R⁵-SiR⁶_{g}(OR⁷)_{3-g}, at least one thereof being -R⁵-SiR⁶_{g}(OR⁷)_{3-g}. R⁵ is oxygen or a C₁-C₄ alkylene group, R⁶ is independently a substituted or unsubstituted monovalent hydrocarbon group free of aliphatic unsaturation, R⁷ is independently a C₁-C₄ alkyl group, alkoxyalkyl group or acyl group, g is an integer of 1 to 3, a is a number of 1 to 1,000, and b is a number of 0 to 1,000.

The preferred component (E) is an organopolysiloxane having the general formula (4): 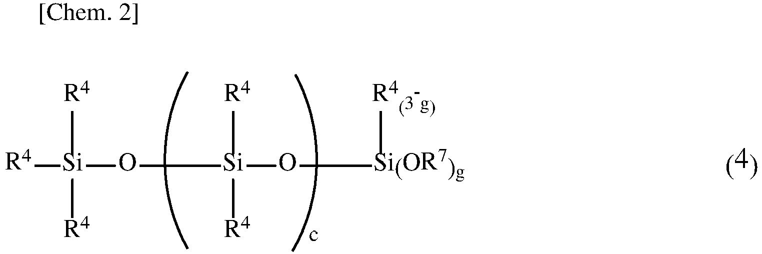 wherein R⁴ is independently a substituted or unsubstituted monovalent hydrocarbon group free of aliphatic unsaturation, R⁷ is independently a C₁-C₄ alkyl or alkoxyalkyl group or acyl group, c is an integer of 5 to 100, and g is an integer of 1 to 3, especially such an organopolysiloxane having a viscosity at 25°C of 0.005 to 100 mPa·s.

In formulae (3) and (4), R⁴ is independently a substituted or unsubstituted, preferably C₁-C₁₀, more preferably C₁-C₆, even more preferably C₁-C₃, monovalent hydrocarbon group free of aliphatic unsaturation. Examples thereof include straight alkyl groups, branched alkyl groups, cyclic alkyl groups, aryl groups, aralkyl groups, and halogenated alkyl groups. Exemplary straight alkyl groups include methyl, ethyl, propyl, hexyl and octyl. Exemplary branched alkyl groups include isopropyl, isobutyl, tert-butyl and 2-ethylhexyl. Exemplary cyclic alkyl groups include cyclopentyl and cyclohexyl. Exemplary aryl groups include phenyl and tolyl. Exemplary aralkyl groups include 2-phenylethyl and 2-methyl-2-phenylethyl. Exemplary halogenated alkyl groups include 3,3,3-trifluoropropyl, 2-(nonafluorobutyl)ethyl, and 2-(heptadecafluorooctyl)ethyl. Preferably R⁴ is methyl or phenyl.

R⁵ is oxygen or a C₁-C₄ alkylene group. R⁶ is independently a substituted or unsubstituted monovalent hydrocarbon group free of aliphatic unsaturation. Examples are as exemplified above for R¹.

R⁷ is independently a C₁-C₄ alkyl or alkoxyalkyl group or acyl group. Exemplary alkyl groups include alkyl groups of 1 to 4 carbon atoms as exemplified above for R⁴. Exemplary alkoxyalkyl groups include methoxyethyl and methoxypropyl. Exemplary acyl groups include those of preferably 2 to 8 carbon atoms, such as acetyl and octanoyl. R⁷ is preferably an alkyl group, especially methyl or ethyl.

The subscripts "a" and b are as defined above, preferably a+b is 10 to 50, c is an integer of 5 to 100, preferably 10 to 50, and g is an integer of 1 to 3, preferably 3. The number of OR⁷ groups in the molecule is preferably 1 to 6, especially 3 or 6.

Illustrative examples of component (E) are shown below.

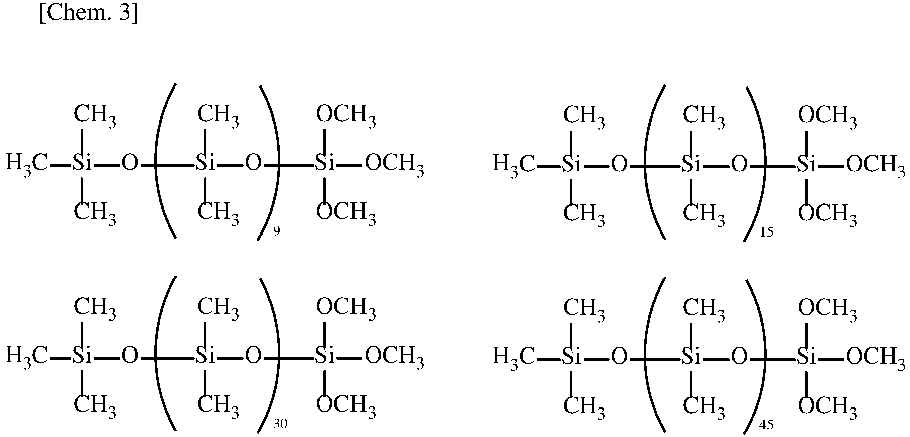

When component (E) is blended in the silicone composition, the amount of component (E) used is preferably 50 to 300 parts by weight per 100 parts by weight of the total of components (A) and (B). If component (E) is less than 50 parts by weight, the silicone composition may become too thick to discharge. If component (E) is more than 300 parts by weight, the silicone composition may have too low a viscosity, with the risk of component (E) bleeding out.

### [Other components]

Any components other than the foregoing may be blended in the silicone composition insofar as the objects of the invention are not impaired.

Fillers may be used, alone or in admixture. Suitable fillers are non-reinforcing fillers including wollastonite, talc, aluminum oxide, calcium sulfate, magnesium carbonate, clay such as kaolin; aluminum hydroxide, magnesium hydroxide, graphite, baryte, copper carbonate such as malachite; nickel carbonate such as zarachite; barium carbonate such as witherite; strontium carbonate such as strontianite; silicates such as forsterite, silimanite, mullite, pyrophyllite, kaolinite and vermiculite; and diatomaceous earth; and the foregoing fillers which have been treated on the surface with organosilicon compounds. When a filler is blended in the silicone composition, its amount is preferably up to 100 parts by weight per 100 parts by weight of the total of components (A) and (B).

Also a tackifier may be blended for improving the adhesion of the silicone composition. The tackifier may be used alone or in admixture. Suitable tackifiers include alkylalkenyldialkoxysilanes such as methylvinyldimethoxysilane, ethylvinyldimethoxysilane, methylvinyldiethoxysilane, ethylvinyldiethoxysilane; alkylalkenyldioximesilanes such as methylvinyldioximesilane and ethylvinyldioximesilane; alkylalkenyldiacetoxysilanes such as methylvinyldiacetoxysilane and ethylvinyldiacetoxysilane; alkenylalkyldihydroxysilanes such as methylvinyldihydroxysilane and ethylvinyldihydroxysilane; organotrialkoxysilanes such as methyltrimethoxysilane, vinyltrimethoxysilane, allyltrimethoxysilane, 3-methacryloxypropyltrimethoxysilane, 3-glycidoxypropyltrimethoxysilane, 3-aminopropyltrimethoxysilane, N-(2-aminoethyl)-3-aminopropyltrimethoxysilane, bis(trimethoxysilyl)propane, bis(trimethoxysilyl)hexane; isocyanurate compounds such as triallyl isocyanurate, diallyl(3-trimethoxysilyl) isocyanurate, tris(3-trimethoxysilylpropyl) isocyanurate, tris(3-triethoxysilylpropyl) isocyanurate, tris(3-tripropoxysilylpropyl) isocyanurate; titanium compounds such as tetraethyl titanate, tetrapropyl titanate, tetrabutyl titanate, tetra(2-ethylhexyl) titanate, titanium ethylacetonate, titanium acetylacetonate; aluminum compounds such as ethylacetoacetate aluminum diisopropylate, aluminum tris(ethylacetoacetate), alkylacetoacetate aluminum diisopropylates, aluminum tris(acetylacetonate), aluminum monoacetylacetonate bis(ethylacetoacetate); and zirconium compounds such as zirconium acetylacetonate, zirconium butoxyacetylacetonate, zirconium bisacetylacetonate, zirconium ethylacetoacetate.

When the tackifier is blended in the silicone composition, its amount is preferably 0.01 to 10 parts by weight per 100 parts by weight of the total of components (A) and (B), though not limited thereto.

### Preparation method

The silicone composition is prepared, for example, by a method comprising the steps of:
(I) mixing components (A), (B), (C) and (D) with a platinum group metal base curing catalyst such that a molar ratio (Si-H/Si-Vi) of the Si-H group in component (B) to the silicon-bonded alkenyl group in component (A) may range from 2.0 to 9.0, and
(II) heating the resulting mixture at 100 to 180°C for 30 minutes to 4 hours for reacting component (A) with component (B).

The preferred range of the molar ratio (Si-H/Si-Vi) is as defined above.

In step (I), components (A), (B), (C) and (D), a platinum group metal base curing catalyst, and optionally component (E) and other components are admitted into a mixer where they are mixed, for example, Trimix, Twin Mix, and Planetary Mixer (trade marks of mixers by Inoue Mfg. Co., Ltd.), Ultramixer (trade mark of mixer by Mizuho Industrial Co., Ltd.), and Hivis Disper Mix (trade mark of mixer by Primix Corp.). The liquids and inorganic fillers may be mixed at a temperature which is not particularly limited, typically room temperature, for from 5 to 30 minutes.

In step (II) following the mixing step, the mixture is heated at 100 to 180°C for 30 minutes to 4 hours for reacting component (A) with component (B). The order of heating and then mixing under reduced pressure is acceptable.

### Silicone composition (cured product)

The silicone composition preferably has a thermal conductivity of at least 2 W/mK, more preferably at least 3 W/mK. The upper limit is not critical, but may be up to 20 W/mK. Because of such a high thermal conductivity, the silicone composition is suited for heat dissipation.

The silicone composition should have an absolute viscosity at 25°C of 100 to 800 Pa·s, preferably 150 to 600 Pa·s. If the absolute viscosity is less than 100 Pa·s, the silicone composition drips down during a coating step to retard coating performance, and there is a possibility that components (C) and (D) will settle during long-term storage. If the absolute viscosity exceeds 800 Pa·s, coating performance is retarded, with a loss of production efficiency. A silicone composition having an absolute viscosity in the above-defined range may be obtained by adjusting the degree of crosslinking between components (A) and (B) and the amounts of components (C) and (D).

When a storage modulus is measured under the following rheometer conditions, the silicone composition should preferably have a larger value of G'(150°C)/G'(25°C) ratio, specifically from 2 to 20, more preferably from 2 to 6. For the measurement, HAAKE MARS rheometer (Thermo Fisher Scientific) may be used.

**Rheometer measurement conditions**

| | |
|---|---|
| measurement jig: | parallel plates P20 TL |
| measurement gap: | 1.00 mm (sample volume: 4.0 mL) |
| measurement mode: | fixed deformation-frequency dependent measurement |
| deformation conditions: | CD-Auto Strain 1.00±0.05% |
| measurement frequency: | 0.1-10 Hz |
| measurement temperature: | 25°C±1°C, ramp at 15°C/min to 150°C, 150°C±1°C |

### EXAMPLES

Examples and Comparative Examples are given below for further illustrating the invention although the invention is not limited to Examples. Notably, the viscosity of components (A) and (B) and silicone composition is measured at 25°C by a Malcom viscometer.

The components used in Examples and Comparative Examples are identified below.

### Addition reaction catalyst

A 100-mL reactor flask equipped with a reflux condenser, thermometer and stirrer was charged with 8 g of chloroplatinic acid H₂PtCl₆·6H₂O (37.6 wt% Pt) and then with 40.0 g of ethanol and 16.0 g of divinyltetramethyldisiloxane. The mixture was heated at 70°C for 50 hours for reaction. While the reaction mixture was stirred at room temperature, 16 g of sodium hydrogencarbonate was slowly added over 2 hours to neutralize the reaction mixture. The reaction mixture was suction filtered, and the filtrate was distilled under reduced pressure to substantially remove the ethanol and the excess of divinyltetramethyldisiloxane. The residue was diluted with toluene to a total amount of 600 g (containing 0.5 wt% of Pt).

To the toluene solution of platinum-vinylsiloxane complex, 290 g of molecular chain both end dimethylvinylsiloxy-capped dimethylpolysiloxane having a viscosity of 600 mPa·s was added, followed by stirring. Toluene was distilled off at 60°C/20 torr. The product from which toluene was substantially removed was used as a hydrosilylation catalyst (containing 1.0 wt% of Pt).

### (A) component

(A-1) molecular chain both-ends dimethylvinylsiloxy-capped dimethylpolysiloxane having a viscosity of 600 mPa·s (vinyl content 0.015 mol/100 g)
(A-2) molecular chain (average) single-end dimethylvinylsiloxy-capped methylpolysiloxane having a viscosity of 700 mPa·s (vinyl content 0.0036 mol/100 g)

### (B) component

### (B-1) organohydrogenpolysiloxane of the following formula

Note that the order of arrangement of siloxane units in parentheses is not limited to the illustrated order. 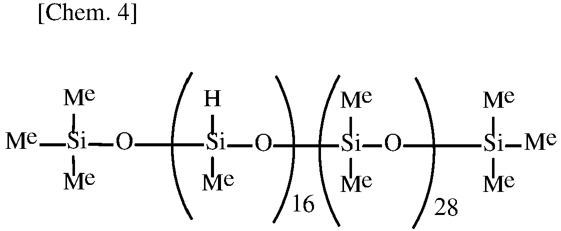 wherein Me stands for methyl (Si-H content 0.0055 mol/g)

### (B-2) organohydrogenpolysiloxane of the following formula

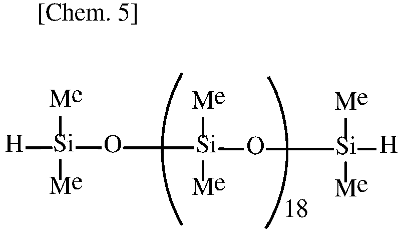

wherein Me stands for methyl (Si-H content 0.0013 mol/g)

### (C) inorganic filler

C-1: two zinc oxide species (JIS, average particle size 1 µm), PZC 9.5
C-2: aluminum oxide powder (average particle size 1 µm), PZC 8.5
C-3: magnesium oxide powder (average particle size 1 µm), PZC 11.5
C-4: aluminum nitride powder (average particle size 1 µm), PZC 9.5
C-5: silicon carbide (average particle size 1 µm), PZC 4 (comparison)

### (D) heat-conductive inorganic filler

D-1: aluminum oxide powder (average particle size 10 µm)

### (E) E-1: organopolysiloxane of the following formula

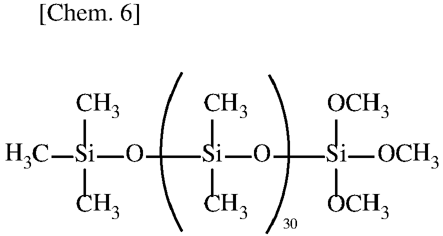

### (F) F-1: the platinum hydrosilylation catalyst prepared above

Heat-conductive silicone compositions of the formulation shown in Tables were prepared by the following method.

### EXAMPLES AND COMPARATIVE EXAMPLES

### Preparation of heat-conductive silicone compositions

Components (A), (B), (C), (D), (E) and hydrosilylation catalyst were blended at room temperature and mixed on a planetary mixer for 5 to 10 minutes. Notably, component (C) was used as a premix obtained by previously heating and mixing it in components (A) and (B). The resulting mixture was heated at 165°C and mixed under reduced pressure for 120 minutes.

Properties of the heat-conductive silicone compositions were measured by the following tests.

### Thermal conductivity measurement

Measured at 25°C by TPA-501 meter (Kyoto Electronics Mfg. Co., Ltd.).

### Viscosity measurement

Viscosity was at 25°C and measured by Malcom viscometer Type PC-10AA. In the step of coating a composition, a viscosity of 800 Pa·s or higher is regarded unacceptable for practical use.

### Ratio of storage modulus of silicone composition at 150°C and 25°C

The silicone composition was measured for G' (shear storage modulus) at 25°C and 150°C, from which a ratio was computed.

**Rheometer measurement**

| | |
|---|---|
| rheometer: | HAAKE MARS 40 |
| measurement jig: | parallel plates P20 TL |
| measurement gap: | 1.00 mm (sample volume: 4.0 mL) |
| measurement mode: | fixed deformation-frequency dependent measurement |
| deformation conditions: | CD-Auto Strain 1.00±0.05% |
| measurement frequency: | 0.1-10 Hz |
| measurement temperature: | 25°C±1°C, ramp at 15°C/min to 150°C, 150°C±1°C |

After storage modulus was measured under the above conditions, a G'(150°C)/G'(25°C) ratio was computed.

### Sliding test for silicone composition

By coating the above-prepared silicone composition onto a glass plate at a volume of 0.325 mL, placing a spacer of 1 mm, and covering with another glass plate, a disc-shaped sample of diameter -20 mm and thickness 1 mm was prepared.

With the disc set to stand upright, the sample sandwiched between glass plates was subjected to a thermal test under thermal cycling conditions between -40°C/30 min. and 150°C/30 min. After 250 cycles, the state of the sample was observed.

When the cured silicone composition in disc shape had slid from the original position on the glass plates, it was rated "slide".

When the upright standing silicone composition had not slid at all from the original position, it was rated "no-slide". This situation is preferable.

**Table 1**

| Formulation (pbw) | | H equivalent vinyl equivalent (mol/g) | Specific gravity (g/cm³) | Example | | | | |
|---|---|---|---|---|---|---|---|---|
| | | | | 1 | 2 | 3 | 4 | 5 |
| (A) | A-1 | 1.5E-04 | 1.0 | 40.0 | 80.0 | - | - | 15.0 |
| | A-2 | 3.6E-05 | 1.0 | - | - | 80.0 | 80.0 | 35.0 |
| (B) | B-1 | 5.5E-03 | 1.0 | 8.7 | - | 1.4 | 2.1 | 3.6 |
| | B-2 | 1.3E-03 | 1.0 | - | 18.5 | - | - | - |
| (C) | C-1 | N.A. | 5.6 | 550.0 | 550.0 | 550.0 | 550.0 | 550.0 |
| | C-2 | N.A. | 3.9 | - | - | - | - | - |
| | C-3 | N.A. | 3.7 | - | - | - | - | - |
| | C-4 | N.A. | 3.3 | - | - | - | - | - |
| (D) | D-1 | N.A. | 3.9 | 1,300.0 | 1,300.0 | 1,300.0 | 1,300.0 | 1,300.0 |
| (E) | E-1 | N.A. | 1.0 | 120.0 | 80.0 | 80.0 | 80.0 | 110.0 |
| (F) | F-1 | N.A. | 1.0 | 0.2 | 0.2 | 0.2 | 0.2 | 0.2 |
| molar ratio of Si-H (B) / Si-Vi (A) | | | | 8.0 | 2.0 | 2.0 | 3.0 | 5.0 |
| (C+D) pbw per 100 pbw (A+B) | | | | 3,799 | 1,878 | 2,273 | 2,253 | 3,451 |
| Thermal conductivity (W/mK) | | | | 3.3 | 3.2 | 3.4 | 3.4 | 3.4 |
| Viscosity (Pa·s) | | | | 650 | 150 | 500 | 450 | 300 |
| G'(150°C) / G'(25°C) ratio | | | | 3.5 | 2.2 | 3.5 | 3.8 | 3.3 |
| Sliding test | | | | no-slide | no-slide | no-slide | no-slide | no-slide |

**Table 2**

| Formulation (pbw) | | H equivalent vinyl equivalent (mol/g) | Specific gravity (g/cm ³) | Example | | | | |
|---|---|---|---|---|---|---|---|---|
| | | | | 6 | 7 | 8 | 9 | 10 |
| (A) | A-1 | 1.5E-04 | 1.0 | 15.0 | 15.0 | 15.0 | 15.0 | 15.0 |
| | A-2 | 3.6E-05 | 1.0 | 35.0 | 35.0 | 35.0 | 35.0 | 35.0 |
| (B) | B-1 | 5.5E-03 | 1.0 | 5.0 | 3.6 | 3.6 | 3.6 | 3.6 |
| | B-2 | 1.3E-03 | 1.0 | - | - | - | - | - |
| (C) | C-1 | N.A. | 5.6 | 550.0 | 250.0 | - | - | - |
| | C-2 | N.A. | 3.9 | - | - | 383.0 | - | - |
| | C-3 | N.A. | 3.7 | - | - | - | 521.8 | - |
| | C-4 | N.A. | 3.3 | - | - | - | - | 459.7 |
| (D) | D-1 | N.A. | 3.9 | 1,300.0 | 1,508.9 | 1,300.0 | 1,300.0 | 1,300.0 |
| (E) | E-1 | N.A. | 1.0 | 110.0 | 110.0 | 110.0 | 110.0 | 110.0 |
| (F) | F-1 | N.A. | 1.0 | 0.2 | 0.2 | 0.2 | 0.2 | 0.2 |
| molar ratio of Si-H (B) /Si-Vi (A) | | | | 7.0 | 5.0 | 5.0 | 5.0 | 5.0 |
| (C+D) pbw per 100 pbw (A+B) | | | | 3,364 | 3,282 | 3,140 | 3,399 | 3,283 |
| Thermal conductivity (W/mK) | | | | 3.4 | 3.4 | 3.4 | 3.5 | 3.4 |
| Viscosity (Pa·s) | | | | 150 | 450 | 350 | 450 | 400 |
| G'(150°C) / G'(25°C) ratio | | | | 3.9 | 2.8 | 3.3 | 4.1 | 3.2 |
| Sliding test | | | | no-slide | no-slide | no-slide | no-slide | no-slide |

**Table 3**

| Formulation (pbw) | | H equivalent vinyl equivalent (mol/g) | Specific gravity (g/cm³) | Comparative Example | | | | | | |
|---|---|---|---|---|---|---|---|---|---|---|
| | | | | 1 | 2 | 3 | 4 | 5 | 6 | 7 |
| (A) | A-1 | 1.5E-04 | 1.0 | 80.0 | 80.0 | 15.0 | 15.0 | 15.0 | 15.0 | 15.0 |
| | A-2 | 3.6E-05 | 1.0 | | | 35.0 | 35.0 | 35.0 | 35.0 | 35.0 |
| (B) | B-1 | 5.5E-03 | 1.0 | 2.2 | | 1.0 | 6.4 | 6.4 | 6.4 | 3.6 |
| | B-2 | 1.3E-03 | 1.0 | | 13.8 | | | | | |
| (C) | C-1 | N.A. | 5.6 | 550.0 | 550.0 | 550.0 | 550.0 | | | |
| | C-2 | N.A. | 3.9 | | | | | 383.0 | | |
| | C-3 | N.A. | 3.7 | | | | | | 521.8 | |
| | C-4 | N.A. | 3.3 | | | | | | | |
| | C-5 | N.A. | 3.2 | | | | | | | 310.4 |
| (D) | D-1 | N.A. | 3.9 | 1300.0 | 1300.0 | 1300.0 | 1300.0 | 1300.0 | 1300.0 | 1300.0 |
| (E) | E-1 | N.A. | 1.0 | 80.0 | 80.0 | 110.0 | 110.0 | 110.0 | 110.0 | 110.0 |
| (F) | F-1 | N.A. | 1.0 | 0.2 | 0.2 | 0.2 | 0.2 | 0.2 | 0.2 | 0.2 |
| molar ratio of Si-H (B) / Si-Vi (A) | | | | 1.0 | 1.5 | 1.5 | 10.0 | 10.0 | 10.0 | 5.6 |
| (C+D) pbw per 100 pbw (A+B) | | | | 2,251 | 1,972 | 3,627 | 3,280 | 2,984 | 3,230 | 3,004 |
| Thermal conductivity (W/mK) | | | | unmeasurable | 3.2 | 3.4 | 3.3 | 3.4 | 3.5 | 3.6 |
| Viscosity (Pa. s) | | | | powdered | <1,000 | <1,000 | 100 | 150 | 200 | 250 |
| G'(150°C) / G'(25°C) ratio | | | | unmeasurable | 3.0 | 1.2 | 1.3 | 1.3 | 1.6 | 1.1 |
| Sliding test | | | | unmeasurable | no-slide | no-slide | slide | slide | slide | slide |

The results in Tables 1 and 2 demonstrate that the heat-conductive silicone compositions within the scope of the invention have a high thermal conductivity, undergo no sliding upon thermal cycling after long-term storage, and are thus effective for heat removal from electric and electronic devices which generate heat during service.

### INDUSTRIAL APPLICABILITY

The heat-conductive silicone compositions of the invention are fully heat-conductive and have improved slide resistance and coating performance, and are suited for heat removal from electric and electronic devices which generate heat during service.

## Claims

1. A heat-conductive silicone composition comprising:
an organopolysiloxane, being a reaction product obtained by reacting
(A) organopolysiloxane having a silicon-bonded alkenyl group with
(B) organohydrogenpolysiloxane in a molar ratio (Si-H/Si-Vi), of Si-H groups in component (B) to silicon-bonded alkenyl groups in component (A), which ranges from 2.0 to 9.0,
(C) inorganic filler selected from among metal oxides and metal nitrides and having an average particle size of up to 3 µm, and
(D) heat-conductive inorganic filler having an average particle size of at least 5 µm, wherein the total of components (C) and (D) is 200 to 6,000 parts by weight per 100 parts by weight of the total of components (A) and (B), and the silicone composition has an absolute viscosity at 25°C of from 100 to 800 Pa·s.

2. Heat-conductive silicone composition of claim 1 wherein when a storage modulus is measured under the following rheometer conditions:
| | |
|---|---|
| measurement jig: | parallel plates P20 TL |
| measurement gap: | 1.00 mm (sample volume: 4.0 mL) |
| measurement mode: | fixed deformation-frequency dependent measurement |
| deformation conditions: | CD-Auto Strain 1.00±0.05% |
| measurement frequency: | 0.1-10 Hz |
| measurement temperature: | 25°C±1°C, ramp at 15°C/min to 150°C, 150°C±1°C, |
the silicone composition has a G'(150°C)/G'(25°C) ratio of 2 to 20.

3. Heat-conductive silicone composition of claim 1 or 2 wherein component (C) is one or more fillers selected from aluminum oxide powder, zinc oxide powder, magnesium oxide powder, aluminum nitride powder, and boron nitride powder, and having a point of zero charge (PZC) of at least pH 6.

4. A method for preparing a heat-conductive silicone composition of any one of claims 1 to 3, comprising the steps of:
mixing components (A), (B), (C) and (D) with a platinum group metal-based curing catalyst such that a molar ratio (Si-H/Si-Vi) of Si-H groups in component (B) to silicon-bonded alkenyl groups in component (A) is in the range from 2.0 to 9.0, and
heating the mixture at 100 to 180°C for from 30 minutes to 4 hours to react component (A) with component (B).
